Europäisches Patentamt

(19) European Patent Office

Office européen des brevets

(11) Publication number: **0 390 220 B1**

# EUROPEAN PATENT SPECIFICATION

(45) Date of publication of patent specification: **30.11.94**  (51) Int. Cl.⁵: **C04B 7/52**, C04B 24/12, C04B 24/16, B02C 23/06

(21) Application number: **90106206.7**

(22) Date of filing: **30.03.90**

(54) Use of synthetic surface-active substances and method for milling Portland clinker for the production of gypsumless Portland cements.

(30) Priority: **30.03.89 CS 1979/89**

(43) Date of publication of application:
**03.10.90 Bulletin 90/40**

(45) Publication of the grant of the patent:
**30.11.94 Bulletin 94/48**

(84) Designated Contracting States:
**AT CH DE DK FR GB IT LI NL SE**

(56) References cited:
**US-A- 3 642 506**
**US-A- 4 204 877**

**CHEMICAL ABSTRACTS, vol. 111, no. 18, 30 October 1989 Columbus, Ohio, USA, page 353; ref. nr. 159279e**

**CHEMICAL ABSTRACTS, vol. 82, no. 4, 27 January 1975 Columbus, Ohio, USA, page 296; ref. 21111v & JP-A-7421408**

**CHEMICAL ABSTRACTS, vol. 84, no. 14, 05 April 1976 Columbus, Ohio, USA, page 306; ref. no. 94610H**

**CHEMICAL ABSTRACTS, vol. 110, no. 10, 15 May 1989 Columbus, Ohio, USA, page 338; ref. 178512w & JP-A-63282143**

(73) Proprietor: **CESKOSLOVENSKA AKADEMIE VED**
**Narodni 2**
**Praha 1 (CS)**

(72) Inventor: **Skvara, Frantisek RNDr DrCs**
**Praha 7**
**Jireckova 18 (CS)**
Inventor: **Hrazdira, Jaroslav, Dipl.-Ing.**
**Brand ysek**
**U materské skoly 1 (CS)**
Inventor: **Vsetecka, Tonás, Dipl.-Ing.**
**Praha 4**
**Semicka 3291 (CS)**

(74) Representative: **Patentanwälte Beetz - Timpe - Siegfried Schmitt-Fumian - Mayr**
**Steinsdorfstrasse 10**
**D-80538 München (DE)**

## Description

The invention relates to a method for milling Portland clinker for the production of gypsumless Portland cements of a specific surface area of 350 to 750 $m^2$/kg with use of admixtures comprising synthetic organic surface-active substances.

The use of specific admixtures added during the milling of cements has been known already from the thirties. Milling admixtures, also called milling intensifiers, are substances preventing the aggregation of particles during the milling process or helping the scattering of the grist during the milling process. The milling admixtures must fulfill the basic condition not to impair the quality of the cements. The milling admixtures further inhibit adhering of the grist to the milling bodies, thus increasing the output of the mill. The use of milling admixtures reduces the cost of milling and allows the production of high-quality cements. The milling admixtures ameliorate as well the starting resistance, facilitate the emptying of silos and/or improve the storage life of cements.

Actually, quite a number of substances are used industrially as milling admixtures for the production of cements, especially for the production of Portland cements, such as (cf. W. H. Duda: Cement - Data Book, 1985) calcium lignosulfonate containing no monosaccharides, mixtures of triethanolamine with calcium lignosulfonate, various types of fatty acids, various types of diols, especially glycols, and many other commercial mixtures. In the Federal Republic of Germany liquid milling admixtures comprising substances of aminoacetate, ethyleneglycol or propyleneglycol type are used for the production of PC 550 (O. Labahn, B. Kohlhaas, Ratgeber für Zement-Ingenieure, 1982). The research work in this field is absolutely concentrated on gaining new milling admixtures having the following properties: Positive influence on the milling process, reduction of power consumption in milling, greater specific surface area of the product, and no negative influence on the quality of the cements. From those points of view many substances before all influencing positively the milling process of cements are mentioned in the technical and patent literature. Lists and surveys of these substances are to be found e.g. in Cement-Research-Progress 1974 - 1987.

The problem of milling admixtures is also relevant for a new type of inorganic hydraulic binding agents, namely the gypsumless cements. These cements are based on Portland clinker or white cement and are usually ground in the absence of gypsum. The regulation influence of gypsum is achieved by synergistically acting mixtures of alkaline metal compounds, e.g. carbonates, hydrogen carbonates, silicates or hydroxides, and sulfonated polyelectrolytes, e.g. derivatives of lignin, sulfonated polyphenolates or other liquefying agents applied as plastifiers. Gypsumless Portland cements (referred to as GL cements) are outstanding because of their better qualities as compared with common Portland cements, especially for the preparation of pastes, mortars and concretes with a substantially lower cement-water ratio. The properties of these GL cements have already been described, e.g. in CS-A-257 315. These properties of GL cements can also be obtained by increasing the milling fineness beyond that of common Portland cements.

The mentioned prior art solutions are directed, however, only to the possibility of getting a higher specific surface area of the cements. The solution described in US-A-3 689 294 relates to another view of the problems of GL cements. In this document, as well as in the publication of M. Yudenfreund "Hardened portland cement pastes of low porosity, Cement and Concrete Research 2, 313 - 330, 1972", compositions of freely flowing liquid pastes or mortars and concretes in the expanding state, based on ground cement clinkers of specific surface areas of 600 to 900 $m^2$/kg containing at least 0.002 parts of milling admixtures and at least 0.0025 parts of alkaline lignosulfonates of alkaline earths or sulfonated lignin and at least 0.0025 parts of alkali carbonates with a cement-water ratio of 0.20 to 0.28, are described.

These publications specify the following milling admixtures: Kraft lignin (alkali lignin), oleic acid, diethylcarbonate, ethoxylated nonylphenols with different numbers of ethoxy groups, sodium dodecylbenzene sulfonate, mixtures of alkylsulfonates and sulfocarboxylates, sulfosuccinates, alkylated sulfosuccinates, and/or sulfosuccinates with amines and alkylsulfates or with alkylphenol polyglycolethers, triethanolamine, ethylene glycol, and alkylphenol sulfonates. The simultaneous presence of polar and non-polar groups in the molecule is regarded as the main feature of milling admixtures.

It has come out that it was not possible to prepare additives for GL cements of a low cement-water ratio with given workability with application of Brunauer's criterion (US-A-3 689 294), but by selecting additives which are unstable in the alkaline medium. The stability of the matter adsorbed onto the surface of the cement in the alkaline medium is necessary with regard to the fact that admixtures replacing gypsum, e.g. soda + lignosulfonate, form solutions having a pH value of up to 11.5. Furthermore, a very strongly alkaline and limy medium is formed by the contact of the clinker with water. Other materials, though stable in the alkaline medium, have no wetting property for powder materials, e.g. triethanolamine, silanes, siloxanes, stearates, etc., so that they cannot be used for the preparation of additives for GL cements with a low cement-water ratio.

From all matters known up to now and applied as admixtures for the milling of Portland clinkers for GL cements only one single compound gives the required effects, namely the triethanolamide of dodecylbenzene sulfonic acid. Its application, however, used to be accidental, and its effectivity had obviously not been realized.

It is the object of the invention to provide the use of particular admixtures and a method for milling Portland clinkers for the production of gypsumless Portland cements with a specific surface area of 350 to 750 $m^2$/kg, wherein the above-described disadvantages may be overcome.

The above object is achieved according to the independant claims. The dependent claims relate to preferred embodiments.

The present invention provides the use of one or more synthetic organic surface-active substances having wetting properties which are stable in media of a pH value $\leq$ 12 and particularly within the pH range of 9 to 12,
with exception of dodecylbenzene sulfonic acid triethanolamide, as admixtures or components of admixtures for milling Portland clinker for the production of gypsumless cements with a specific surface area of 350 to 750 $m^2$/kg.

In accordance with preferred embodiments, the synthetic organic surface-active substances are selected from
- alkylpolyglycolether sulfates and alkylated alkanolamine-polyglycolethers comprising $C_{10-15}$-alkyl groups,
- alkanolamides of $C_{12-15}$-acids with aliphatic $C_{10-15}$-alcohols and/or sulfated ethoxylated aliphatic $C_{10-15}$-alcohols comprising 3 to 10 ethoxy groups,
- esteramides and esters of sulfated or sulfonated linear fatty acids and sulfonated alkylaryl acids, where the linear chain comprises 5 to 20 carbon atoms,
- condensation products of naphtholsulfonic acid or cresol with formaldehyde, and
- alkylbetaines and sulfoalkylbetaines comprising $C_{8-16}$-alkyl groups.

In accordance with further preferred embodiments, the synthetic organic surface-active substances are selected from alkanolamine derivatives of ethoxylated nonylphenol, sodium alkylpolyglycolether sulfates, ethoxylated sulfated alkylphenols, mixtures of sulfated ethoxylated alcohols with coconut acid monoethanolamide, triethanolamine salts of alkyllbenzenesulfonic acids (alkyl mixtures $C_{8-14}$), the ammonium salt of dodecylbenzene sulfonic acid, alkylbenzenesulfonic acid salts based on $\alpha$-olefins (alkyl mixture $C_{10-12}$), sodium salts of condensation products of $\beta$-naphtholsulfonic acid and cresol with formaldehyde, and alkanolamine salts of sulfated ethoxylated alcohols (3 to 10 ethoxy groups, alkyl mixtures $C_{12-15}$).

Depending on the specific application, it may be advantageous to use the admixtures in the form of an aqueous solution or dispersion, and particularly a concentrate to be diluted before use. Packaging may be in the form of appropriate dosage units.

If necessary, the admixtures may also comprise further, known additives.

The method of this invention for milling Portland clinker for the production of gypsumless cements with a specific surface area of 350 to 750 $m^2$/kg in the presence of a milling admixture is characterized in that synthetic organic surface-achive substances are used, preferably in an amount of 0.01 to 0.15 mass-%, based on the total mass of the Portland clinker, as defined above.

The method according to the invention enables the application of a large range of substances as milling admixtures for the milling of Portland clinkers for the production of gypsumless cements which have not been applied yet up to now and which at the same time meet the requirements such as good wetting properties for powdery materials, high intensification of the milling process, non-toxicity, and positive influence onto both the starting and long-life resistance of GL cements.

In the following, the invention will be further explained with reference to examples.

Example 1

The clinker used for the research milling admixtures has been taken from the current production of a cement factory (Lochkov Works, CS). This clinker has been used for determining the dependance of the milling process of the reached specific surface area up to the value of 750 $m^2$/kg with use of a Seger milling machine. For further experiments a ball mill with a volume of 50 l has been used.

Into the mill was poured a very fine clinker (fraction below 2.5 mm), the milling admixture having been dosed in advance in a concentration of 0.03 to 0.15 mass-% of the clinker mass (based on 100 % of active matter, or dry matter). The time duration of the different milling processes has been varied. The final product has been evaluated according to the reached specific surface area.

EP 0 390 220 B1

The efficiency of the different milling admixtures has been evaluated with the help of a Seger apparatus and of the results of the ball mill experiments. The used milling admixtures are listed in Table 1. The letters A, B, C, D, E, F, G, H, I, J correspond to known milling admixtures, whereas the letters K, L, M, N, O, P, R, S, T, U, V designate milling admixtures according to the invention.

Table 2 shows results of the evaluation of the efficiency of these milling admixtures.

## Table 1 - Applied Milling Admixtures

| Designation | Chemical Composition |
|---|---|
| A | sodium sulfosuccinate |
| B | condensation product of ethylene oxide and propylene oxide (9 ethoxy groups and 9 propoxy groups in the molecule) |
| C | sodium monoalkylpolyglycolester sulfate ($C_{11-16}$-alkyl, 9-10 ethoxy groups) |
| D | ethoxylated nonylphenol (15-20 ethoxy groups) |
| E | triethanolamine |
| F | ethyleneglycol |
| G | silicone oil |
| H | condensation product of sulfonated phenol with formaldehyde |
| I | mixture of sodium alkylbenzene sulfonate and sodium alkylsulfate (both $C_{12-15}$-alkyl) |
| J | triethanolamide of dodecylbenzene sulfonic acid |
| K | alkanolamine derivative of ethoxylated nonylphenol ($C_{2-6}$-alkanolamine, 5 ethoxy groups) |
| L | sodium alkylpolyglycolether sulfate |

4

(Table 1, continued)

| Designation | Chemical Composition |
|---|---|
| M | ethoxylated sulfated alkylphenol ($C_6$-alkyl, 5 ethoxy groups) |
| N | mixture of sulfated ethoxylated alcohol ($C_{12}$-alcohol, 3-4 ethoxy groups) with mono-ethanolamide of coconut acids |
| O | alkylbetaine ($C_{12}$-alkyl) |
| P | triethanolamine salt of alkylbenzene-sulfonic acid (alkyl mixture $C_{8-14}$) |
| R | ammonium salt of dodecylbenzene sulfonic acid |
| S | alkylbenzene sulfonic acid salt based on $\alpha$-olefins (alkyl mixture $C_{10}$ - $C_{12}$) |
| T | sodium salt of condensation product of ß-naphtholsulfonic acid and cresol with form-aldehyde |
| U | alkanolamine salt of sulfated ethoxylated alcohol (3 to 10 ethoxy groups, alkyl mixture $C_{12}$ - $C_{15}$) |
| V | sulfated ester of fatty acid ($C_{12}$-alcohol, 3-4 ethoxy groups). |

## Table 2 - Efficiency of Milling Admixtures

| Designation | Milling Efficiency (Seger apparatus, laboratory ball mill) |
|---|---|
| A | slightly intensifying, efficient beyond a specific surface area of 400 $m^2$/kg |
| B | medium efficiency, efficient beyond a specific surface area of 200 $m^2$/kg |
| C | as under A |

(Table 2, continued)

| Designation | Milling Efficiency (Seger apparatus, laboratory ball mill) |
|---|---|
| D | as under B |
| E | strong intensifying effect, efficiency beginning with a specific surface area of 200 $m^2$/kg |
| F | as under E |
| G | as under E |
| H | weak intensifying effect, efficient up to a specific surface area of about 550 $m^2$/kg |
| I | as under H |
| J | strong intensifying effect, efficiency beginning with a specific surface area of 350 $m^2$/kg |
| P | as under J |
| R | medium intensifying effect, efficiency beginning with a specific surface area of 350 $m^2$/kg |
| S | weak intensifying effect, efficiency beginning with a specific surface area of 450 $m^2$/kg |
| K | strongly intensifying, efficiency beginning with a specific surface area of 250 $m^2$/kg |
| L | medium efficiency, efficiency beginning with a specific surface area of 200 $m^2$/kg |
| M | as under L |
| N | as under L |
| O | as under L |
| T | strong intensifying effect, decreasing effect with increasing specific surface area |
| U | strong intensifying effect, efficiency beginning with a specific surface area of 200 $m^2$/kg |
| V | as under T. |

The efficiency of the milling admixtures has been evaluated with regard to a control test, i.e. milling of the same clinker without admixture addition.

Example 2

The same clinker as in Example 1 was used for the experiments. It was ground in a ball mill of 20 l together with the milling admixture up to a specific surface area of 480 to 520 $m^2$/kg. The thus produced cement has been worked up in the form of a paste with a low cement-water ratio w (w = 0.25 and 0.21), with admixture of 0.4 mass-% of Kortan FM (dried sulfonated sodium - ferric polyphenolate) and 1 mass-% of soda (based on the mass of the cement).

The workability of the pastes has been evaluated according to the following empirical scale:

0 unworkable paste

1 paste flowing during vibrations only

2 paste flowing out from the agitation tank on hammering
3 paste flowing out from the agitation tank by gravitation
4 paste freely flowing out from the agitation tank
5 paste of low viscosity freely flowing out from the agitation tank.

Table 3 shows the results of the evaluation of milling admixtures affecting the rheologic properties of pastes and their workability, at a low cement-water ratio. The indicated percentages are by mass.

Table 3

| Concentration and kind of Milling Admixture | Visual Workability at Cement-Water ratio | |
|---|---|---|
| | w = 0.25 | w = 0.21 |
| 0.05 % A | 3 | 1 |
| 0.05 % B | 2 | 0 |
| 0.05 % C | 2 | 0 |
| 0.05 % D | 2 | 0 |
| 0.05 % E | 4 | 1 |
| 0.1 % F | 4 | 0 |
| 0.06 % G | 2 - 3 | 0 |
| 0.05 % H | 5 | 3 |
| 0.05 % I | 3 | 1 |
| 0.03 % J | 5 | 3 |
| 0.05 % K | 4 | 2 |
| 0.05 % L | 3 | 2 |
| 0.05 % M | 4 | 2 |
| 0.05 % N | 5 | 2 - 3 |
| 0.05 % I O | 4 | 2 |
| 0.05 % P | 5 | 2 - 3 |
| 0.05 % R | 4 | 2 |
| 0.05 % S | 4 | 2 |
| 0.05 % T | 4 | 2 - 3 |
| 0.05 % U | 5 | 2 - 3 |
| 0.05 % V | 4 | 2 |

According to producer's data the substances designated with A, B, C, and D are not stable in an alkaline medium of pH 8 to 12.

It is evident from the evaluation of these experiments that pastes with a low cement-water ratio prepared from cements ground together with milling admixtures having surface-active characteristics but no wetting property (admixture C - silicone oil, partly admixture F - ethylene glycol, admixture E - triethanolamine) have a very bad workability. Pastes prepared of cements ground in the presence of surface-active substances with wetting properties, but with a low stability in a strongly alkaline medium (admixtures A to D), have as well a bad workability.

The method according to the invention thus eliminates the problem of an arbitrary choice of milling admixtures from a great number of available surface-active substances.

The evaluation results show too, that it is unsuitable to use classical milling admixtures as applied in the production of Portland cements (especially triethanolamine).

Example 3

The same clinker as in Example 1 was used for the experiments. It was ground with liquid milling admixtures. From the obtained cements pastes (w = 0.25) have been prepared with admixture of 1 % of soda, and 0.4 % of Kortan FM (dried sulfonated sodium - ferric polyphenolate). The workability of the pastes has been evaluated according to the empiric scale indicated in Example 2. Further, the strength after 24 hours was measured. Table 4 contains the results.

Table 4

| Milling Admixture | Specific Surface Area (m$^2$/kg) | Workability | Strength after 24 h (MPa) |
|---|---|---|---|
| 0.1 % F | 428 | 3 | 59 |
| 0.05 % H | 421 | 5 | 55.5 |
| 0.05 % D | 390 | 2 | 56 |
| 0.05 % I | 390 | 3 | 45 |
| 0.03 % J | 462 | 5 | 62 |
| 0.05 % N | 390 | 5 | 60 |
| 0.05 % K | 390 | 4 | 69 |
| 0.05 % S | 400 | 4 | 57 |
| 0.05 % T | 390 | 4 | 46 |
| 0.03 % U | 390 | 4 | 59 |
| 0.05 % O | 450 | 4 | 53 |
| 0.05 % R | 340 | 4 | 62 |
| 0.05 % V | 470 | 4 | 69 |

Example 4

The same clinker as in Example 1 was used for the experiments. It was ground with liquid milling admixtures. The following additional admixtures have been used:

W: 0.4 mass-% of Kortan FM (dried sulfonated sodium - ferric polyphenolate) + 1 mass-% of soda

X: 0.85 mass-% of sodium lignosulfonate + 1.2 mass-% of potassium carbonate.

Table 5 shows the results for the obtained GL cements.

Table 5

| Milling admixture | 0.1 % N | 0.1 % N | 0.03 % U |
|---|---|---|---|
| Specific surface area of the cement (m$^2$/kg) | 550 | 550 | 550 |
| Additional admixture | W | X | W |
| w | 0.22 | 0.22 | 0.23 |
| Setting time (min) | 65 | 15 | 110 |
| Strength (MPa) after setting | | | |
| - 2 h | 7.5 | 3.5 | 4.0 |
| - 24 h | 65 | 60 | 72 |
| - 7 d | 80 | 81 | 89 |
| - 28 d | 96 | 101 | 115 |
| - 180 d | 137.5 | 142 | 165 |

Example 5

The clinker used for the experiments has been taken from the current production of a cement factory (Prachovice works). It was ground with liquid milling admixtures. From the obtained GL cements have been prepared concretes with a low cement-water ratio.

The following additional admixtures have been used: Soda + Ralentol (liquid sulfonated sodium - ferric polyphenolate). As lean materials have been used aggregates of 8 to 16 mm, and sand of 0 to 8 mm.

Table 6 shows the obtained results. The strength of concretes prepared with milling admixtures U and J was 50 MPa after 24 hours.

Table 6

| Milling admixture | 0.05 % U | 0.05 % J | 0.05 % E |
|---|---|---|---|
| Specific surface of the cement (m²/kg) | 520 | 450 | 510 |
| w | 0.25<br>0.23 | 0.25 | 0.25 |
| Composition of the concrete (cement: sand:aggregates) | 1:1.4:1.5<br><br>1:1.3:1.4 | 1:1.41:1.52 | 1:1.41:1.52 |
| Dose of cement (kg/m³) | 560<br>590 | 560 | 560 |
| Workability | 8 with VeBe* 12-15 with VeBe | 5 with VeBe | dry uncompactable mixture |

\* standard test with VeBe instrument according to CS standard 731 312.

**Claims**

1. Use of synthetic organic surface-active substances having wetting properties which are stable in media of a pH value ≦ 12 and particularly within the pH-range of 9 to 12, with exception of dodecylbenzene sulfonic acid triethanolamide, as admixtures or components of admixtures for milling Portland clinker for the production of gypsumless cements with a specific surface area of 350 to 750 m²/kg.

2. Use according to claim 1, characterized in that the synthetic organic surface-active substances are selected from
   - alkylpolyglycolether sulfates and alkylated alkanolamine-polyglycolethers comprising $C_{10-15}$-alkyl groups,
   - alkynolamides of $C_{12-15}$-acids with aliphatic $C_{10-15}$-alcohols and/or sulfated ethoxylated aliphatic alcohols comprising 3 to 10 ethoxy groups,
   - esteramides and esters of sulfated or sufonated linear fatty acids and sulfonated alkylaryl acids, wherein the linear chain comprises 5 to 20 carbon atoms,
   - condensation products of naphtholsulfonic acid or cresol with formaldehyde,
   - and
   - alkylbetaines and sulfoalkylbetaines.

3. Use according to claim 1 or 2, characterized in that the synthetic organic surface-active substances are selected from alkynolamine derivates of ethoxylated nonylphenol, sodium alkylpolyglycolether sulfates, ethoxylated sulfated alkylphenols, mixtures of sulfated ethoxylated alcohols with coconut acid monoethanolamide, triethanolamine salts of alkylbenzenesulfonic acids (alkylmixtures $C_{8-14}$), the ammonium salt of dodecylbenzenesulfonic acid, alkylbenzenesulfonic acid salts based on α-olefins (alkyl mixtures $C_{10-12}$), sodium salts of condensation products of β-naptholsulfonic acid and cresol with formaldehyde, and alkanolamine salts of sulfated ethoxylated alcohols (3 to 10 ethoxy groups, alkyl mixtures $C_{12-15}$).

4. Use according to one of claims 1 to 3, characterized in that the surface-active substances are present in the form of an aqueous solution or dispersion, particularly a concentrate to be diluted before use.

5. A method for milling Portland clinker for the production of gypsumless cements with a specific surface area of 350 to 750 m²/kg in the presence of a milling admixture, characterized by the use of synthetic organic surface-active substances according to one of claims 1 to 4.

6. The method according to claim 5, characterized in that the synthetic organic surface-active substances are used in an amount of 0.01 to 0.15 mass-%, based on the total mass of the Portland clinker.

**EP 0 390 220 B1**

**Patentansprüche**

1. Anwendung von synthetischen organischen oberflächenaktiven Stoffen mit Benetzungseigenschaften, welche stabil sind in Medien mit pH Wert $\leq$ 12 und vorzugsweise im Bereich von pH 9 bis 12, mit Ausnahme von Dodezylbenzol des Triethanolamids der Sulphonsäure, als Mahlzusätze oder, Komponenten von Mahlzusätzen für das Mahlen Von Portlandklinker für die Herstellung von gipsfreiem Zement mit spezifischer Oberfläche von 350 bis 750 $m^2$/kg.

2. Anwendung nach Anspruch 1, dadurch gekennzeichnet, dass die synthetischen organischen oberflächenaktiven Stoffe ausgewählt sind aus
   - Alkylpolyglycoläthersulphaten und alkylierten Alkanolamin Polyglycolätherh enthaltend $C_{10-15}$ - Alkylgruppen,
   - Alkinolamiden der $C_{12-15}$ - Säure mit aliphatischen $C_{10-15}$ -Alkoholen und/oder sulphatierten äthoxylierten aliphatischen Alkoholen enthaltend 3 bis 19 Äthoxygruppen,
   - Kondensationsprodukte der Naphtolsulphonsäure oder Kresol mit Formaldehyd, und
   - Alkylbetaine und Sulphoalkylbetaine.

3. Anwendung nach den Ansprüchen 1 oder 2, dadurch gekennzeichnet, dass die synthetischen organischen oberflächenaktiven Stoffe ausgewählt sind aus
   Alkinolaminoderivaten des äthoxylierten Nonylphenols, Natriumalkylpolyglycoläthersulphaten, äthoxylierten - sulphatierten Alkylphenolen,
   Gemischen von sulphatierten äthoxylierten Alkoholen mit Monoäthanolamiden der Palmitinsäure, Triethanolaminsalze der Alkylbenzolsulphonsäure (Alkylgemische $C_{8-14}$), Ammoniumsalze der Dodezylbenzolsulphonsäure, Salze der Alkylbenzolsulphonsäure auf der Basis von $\alpha$- Olefinen ( Alkylgemische $C_{10-12}$, Natriumsalze der Kondensationsprodukte der $\beta$- Naphtolsulphonsäure und des Kresols mit Formaldehyd, und Alkanolaminsalze der sulphatierten äthoxylierten Alkohole ( 3 bis 10 Äthoxygruppen, Alkylgemische $C_{12-15}$).

4. Anwendung nach einen der Ansprüche 1 bis 3, dadurch gekennzeichnet, dass die oberflächenaktiven Stoffe anwesend sind in der Form einer wässrigen Lösung oder Dispersion, vorzugsweise einem Konzentrat, dass vor der Anwendung verdünnt wird.

5. Verfahren zum Mahlen des Portlandklinkers für die Herstellung von gipsfreiem Zement mit einer spezifischen Oberfläche von 350 bis 750 $m^2$/kg in der Gegenwart von Mahlzusätzen, gekennzeichnet durch die Anwendung der synthetischen organischen oberflächenaktiven Stoffe nach einem der Ansprüche 1 bis 4.

6. Verfahren nach Anspruch 5, gekennzeichnet dadruch, dass die synthetischen organischen oberflächenaktiven Stoffe in einer Menge von 0.01 bis 0.15 Masse %, bezogen auf die gesamte Masse des Portlandklinkers, verwendet werden.

**Revendications**

1. Une application des substances synthétiques organiques actives en surface possédants des propriétés de mouillage stables dans les milieux de pH $\leq$ 12 et particulièrement dans la région de pH de 9 jusqu'à 12, a l'exception du triethanolamide de l'acide dodecylbenzènesulphonique, comme les ingrédients ou composants des ingrédients pour la mouture des clinkers de Portland pour la production des ciments sans le gypse avec une superficie spécifique de 350 à 750 $m^2$ /kg.

2. L'application conformément à la revendication 1 caractérisée tant que las substances synthétiques organiques d'activité superficielle sont choisies parmi
   - des sulphates d'alkylpolyglycolethers et d'alkanol-amine-poly- glycolethers alkylés contenant des groupes alkyls de $C_{10-15}$,
   - des alkynolamides des acides de $C_{12-15}$ avec des alcools aliphatiques de $C_{10-15}$ et/ou des alcools aliphatiques ethoxylés sulphatisés contenant de 3 à 10 groupes ethoxy,
   - des esteramides et des esters des acides bras linéaires sulphatisés ou sulphonés et des acides alkylaryls sulphonés, quand la chaîne linéaire contient de 5 à 20 atomes de carbone,

10

- des produits de la condensation de l'acide naphtolsulphonique ou du crésol avec le formaldehyde,
- et
- des alkylbétaines et des sulphoalkylbétaines.

3. L'application conformément aux revendications 1 ou 2, caractérisée par le fait que les substances organiques synthétiques d'activité superficielle sont choisies parmi des dérivées alkynolamine de nonylphenol ethoxylé, d'alkylpolyglycolethers sulphates de sodium, des alkylphenols sulphatisés éthoxylés, des mélanges des alcools sulphatisés ethoxylés avec monoétanolamide de l'acide de coconut, des sels triethanolamine des acides alkylbenzènesulphoniques (des mélanges d'alkyls de $C_{8-14}$), le sel ammonique de l'acide dodecylbenzènesulphonique, les sels de l'acide alkylbenzènesulphonique basés sur les $\alpha$-olefines (les mélanges d'alkyls de $C_{10-12}$) les sels sodiques des produits de la condensation de l'acide $\beta$-naphtolsulphonique et du crésol avec le formaldehyde et des sels d'alkanolamine des alcools sulphatisés éthoxylés (de 3 à 10 groupes éthoxy, les mélanges d'alkyls de $C_{12-15}$).

4. Une application conformément a l'une des revendications de 1 à 3, caractérisée par la présence des substances d'activité superficielle dans la forme d'une solution ou d'une dispersion aqueuse, particulièrement concentrée qu'on doit diluer avant l'application.

5. Une méthode de la mouture de clinkers de Portland pour la production des ciments sans le gypse avec une superficie spécifique de 350 à 750 $m^2$/kg en présence d'un ingrédient, caractérisé par l'application des substances organiques synthétiques d'activité superficielle conformément a l'une des revendications de 1 à 4.

6. La méthode conformément à la revendication 5 caractérisée par le fait que les substances d'activité superficielle sont employées dans une quantité de 0.01 à 0.15 pour cent en masse relié à la masse totale du clinker de Portland.